# EUROPÄISCHE PATENTSCHRIFT

(11) **EP 3 083 333 B1**
(45) Veröffentlichungstag und Bekanntmachung des Hinweises auf die Patenterteilung: **02.03.2022**
(21) Anmeldenummer: 14808843.8
(22) Anmeldetag: 03.12.2014
(51) Int. Cl.: B60Q 1/26, B60Q 1/32, B60Q 1/24, B60Q 1/04, B60Q 1/08

(54) **BELEUCHTEN EINER FAHRZEUGUMGEBUNG**
ILLUMINATING THE SURROUNDINGS OF A VEHICLE
ÉCLAIRAGE DE L'ENVIRONNEMENT D'UN VÉHICULE

(30) Priorität: 20.12.2013 DE 102013021941
(43) Veröffentlichungstag der Anmeldung: 26.10.2016
(73) Patentinhaber: Audi AG, 85045 Ingolstadt (DE)
(72) Erfinder: GUT, Carsten, 85051 Ingolstadt (DE)
(74) Vertreter: Thielmann, Frank
(86) Internationale Anmeldenummer: PCT/EP2014/003211
(87) Internationale Veröffentlichungsnummer: WO 2015/090516

(56) Entgegenhaltungen:
- EP-A1- 2 384 936
- DE-A1- 10 338 756
- DE-A1-102009 005 558
- DE-A1-102012 024 513
- US-A1- 2004 104 815
- US-A1- 2006 235 753

## Beschreibung

Die vorliegende Erfindung betrifft eine Fahrzeugbeleuchtungsvorrichtung zum Beleuchten einer Fahrzeugumgebung eines Fahrzeugs, mit wenigstens einem an dem Fahrzeug angeordneten Fahrzeugscheinwerfer und einer Steuerungseinheit zum Steuern des Fahrzeugscheinwerfers. Darüber hinaus betrifft die Erfindung ein Verfahren zum Beleuchten einer Fahrzeugumgebung eines Fahrzeugs mittels wenigstens eines an dem Fahrzeug angeordneten Fahrzeugscheinwerfers, der mittels einer Steuerungseinheit gesteuert wird. Weiterhin betrifft die Erfindung ein Rechnerprogrammprodukt. Schließlich betrifft die Erfindung ein Fahrzeug mit einem Fahrwerk und einer mit dem Fahrwerk verbundenen Fahrerkabine.

Aus dem Stand der Technik ist es bekannt, für ein Kraftfahrzeug ein Nutzerbegrüßungssystem vorzusehen, welches bei einem Kraftfahrzeug im abgestellten Zustand aktiviert werden kann und eine Aktivierung von Scheinwerfern des Kraftfahrzeugs vornimmt. Ein solches Nutzerbegrüßungssystem offenbart die DE 10 2005 041 261 A1. Das hier offenbarte Nutzerbegrüßungssystem sieht vor, dass ein Abstand der Nutzers zum abgestellten Fahrzeug ermittelt wird und in Abhängigkeit des Abstands eine Begrüßungsbetriebseinrichtung betrieben wird, so dass ein Scheinwerfer des Kraftfahrzeugs in Abhängigkeit des erfassten Abstands ausgewählt und eingeschaltet wird.

Bei der DE 10 2005 041 261 A1 erweist es sich als nachteilig, wenn eine Vielzahl von Fahrzeugen mit einem derartigen Nutzerbegrüßungssystem unmittelbar benachbart zueinander abgestellt sind und die Nutzer unmittelbar aufeinanderfolgend oder zeitgleich in die Nähe ihrer Fahrzeuge kommen und das jeweilige Nutzerbegrüßungssystem aktivieren. Dadurch ist es dem Nutzer insbesondere bei Dunkelheit nicht mehr möglich, sein Fahrzeug von den anderen Fahrzeugen zu unterscheiden.

Ferner offenbart die DE 10 2012 024 513 A1 eine Umfeldbeleuchtungseinrichtung und ein Verfahren zu deren Betrieb. Die DE 10 2009 005 558 A1 offenbart ein Kraftfahrzeug mit einer Schalenstruktur mit integrierten Leuchtelementen. Weiterhin offenbart die DE 10 2012 004 759 A1 eine Rückleuchtenanordnung für ein Kraftfahrzeug. Schließlich offenbart die CN 102 767 782 A ein Begrüßungslampe sowie ein Projektionsverfahren hierfür.

Die Erfindung greift diesen Mangel auf und macht es sich zur Aufgabe, hier eine Verbesserung bereitzustellen.

Zur Lösung der Aufgabe schlägt die Erfindung eine Fahrzeugbeleuchtungsvorrichtung, ein Fahrzeug sowie ein Verfahren gemäß den unabhängigen Ansprüchen vor. Weitere vorteilhafte Ausgestaltungen und Merkmale ergeben sich durch Merkmale der abhängigen Ansprüche.

Insbesondere schlägt die Erfindung bei einer gattungsgemäßen Fahrzeugbeleuchtungsvorrichtung vor, dass an die Steuerungseinheit eine Schnittstelle zum Eingeben von einer Beleuchtungskulisse entsprechenden Daten durch einen Fahrer des Fahrzeugs angeschlossen ist, wobei die Steuerungseinheit eingerichtet ist, die Lichtsegmente zum Bereitstellen der Beleuchtungskulisse entsprechend der vom Fahrer eingegebenen Daten einzustellen.

Fahrzeugseitig schlägt die Erfindung insbesondere vor, dass das Fahrzeug eine Fahrzeugbeleuchtungsvorrichtung gemäß der Erfindung aufweist. Ein Fahrzeug kann ein Landfahrzeug, insbesondere ein Kraftfahrzeug sein. Es kann aber auch ein Wasserfahrzeug oder ein Luftfahrzeug sein.

Verfahrensseitig schlägt die Erfindung bei einem gattungsgemäßen Verfahren insbesondere vor, dass der Fahrzeugscheinwerfer eine Mehrzahl von mittels der Steuerungseinheit steuerbaren Lichtsegmenten bereitstellt, welche Lichtsegmente zum Bereitstellen der Beleuchtungskulisse entsprechend vom Fahrer eingegebenen Daten eingestellt werden, zu welchem Zweck die Daten über eine an die Steuerungseinheit angeschlossene Schnittstelle durch einen Fahrer des Fahrzeugs eingegeben werden.

Die Erfindung nutzt die Möglichkeiten, die ein Fahrzeugscheinwerfer mit Lichtsegmenten bereitzustellen vermag. Die Lichtsegmente sind Elemente des Fahrzeugscheinwerfers, die mittels der Steuerungseinheit vorzugsweise einzeln, insbesondere individuell ansteuerbar sind.

Erfindungsgemäß umfasst der Fahrzeugscheinwerfer eine Matrix aus einer Vielzahl einzeln steuerbarer Lichtsegmente, sodass eine hoch variable Beleuchtung erreicht werden kann, indem die einzelnen Lichtsegmente mittels der Steuerungseinheit individuell angesteuert werden. Dies eröffnet die Möglichkeit, durch Implementieren einer Steuerungseinheit gemäß der Erfindung die Lichtsegmente so anzusteuern, dass eine Beleuchtungskulisse erzeugt werden kann. Die Beleuchtungskulisse ist ein Beleuchtungszusammenspiel der Lichtsegmente des Fahrzeugscheinwerfers, oder wenn mehrere Fahrzeugscheinwerfer involviert sind, ein Beleuchtungszusammenspiel der Lichtsegmente der involvierten Fahrzeugscheinwerfer.

Die individuelle Steuerungsmöglichkeit eröffnet das Bereitstellen einer nahezu unbegrenzten Anzahl von unterschiedlichen Beleuchtungskulissen, so dass eine Individualisierung des Fahrzeugs in Bezug auf die Beleuchtungskulisse erreicht werden kann. Dies lässt sich unter anderem vorteilhaft bei Coming-Home/Leaving-Home-Funktionen integrieren. Die Beleuchtungskulisse dient dazu, die Fahrzeugumgebung in vorgegebener Weise auszuleuchten beziehungsweise zu beleuchten. Deshalb braucht die Steuerungseinheit keine separate Steuerungseinheit zu sein, sondern sie kann auch in eine bereits im Fahrzeug vorhandene Steuerungseinheit integriert sein. Dadurch besteht die Möglichkeit die Erfindung auch noch nachträglich in ein Fahrzeug zu integrieren.

Insbesondere können die Lichtsegmente jeweils wenigstens eine Lichtquelle aufweisen und die Steuerungseinheit dazu eingerichtet sein, die Lichtquellen der Lichtsegmente zum Erzeugen der Beleuchtungskulisse einzeln zu steuern. Der Fahrzeugscheinwerfer ist erfindungsgemäß matrixartig aufgebaut.

Weist ein Lichtsegment mehr als eine Lichtquelle auf, kann vorgesehen sein, dass sämtliche Lichtquellen dieses Lichtsegments nur gemeinsam steuerbar sind. Dadurch lässt sich Steuerungsaufwand reduzieren. Dadurch lässt sich auf einfache Weise ein Gruppieren von Lichtquellen erreicht. Weiterhin kann aber auch ein einzelnes Steuern jeder Lichtquelle des Lichtsegments vorgesehen sein. Beispielsweise umfasst ein solcher Fahrzeugscheinwerfer gemäß einer Ausgestaltung der Erfindung 50, 100, 1000 oder auch noch mehr Lichtquellen. Ein solcher Fahrzeugscheinwerfer kann beispielsweise durch eine Matrix von Leuchtdioden gebildet sein, die in einer Ebene benachbart zueinander angeordnet sind und jeweils individuell an die Steuerungseinheit angeschlossen sind. Zeilen, Spalten und/oder Oberflächenbereich einer Leuchtfläche des Fahrzeugsscheinwerfers können die Lichtsegmente bilden. Darüber hinaus kann ein solcher Scheinwerfer auch durch einen Projektor gebildet sein, der eine oder mehrere Laserstrahlungsquellen umfasst, die einen ablenkbaren Laserstrahl erzeugt beziehungsweise erzeugen, der auf eine Konversionsschicht gerichtet ist und die Konversionsschicht in gewünschter Weise bestrahlt. Die bestrahlten Bereiche der Konversionsschicht setzen dann sichtbares Licht frei, welches für Beleuchtungszwecke bereitgestellt wird. Durch entsprechende Steuerung des Laserstrahls kann eine durch die Konversionsschicht bereitgestellte Leuchtfläche ebenso matrixartig zum Leuchten angeregt werden. Hierfür ist eine Laserstrahlablenkeinrichtung vorgesehen, die mittels der Steuerungseinheit ebenso gesteuert werden kann.

Die Steuerungseinheit kann durch ein elektronische Schaltung, eine Rechnereinheit, Kombinationen hiervon und/oder dergleichen gebildet sein. Die Rechnereinheit kann derart eingerichtet sein, dass sie das Verfahren gemäß der Erfindung ausführen kann, zu welchem Zweck sie mittels eines Programms entsprechend gesteuert wird. Sowohl die Rechnereinheit als auch die elektronische Schaltung können durch einen oder mehrere Halbleiterchips gebildet sein. Darüber hinaus kann die Steuerungseinheit auch durch diskrete elektronische Bauelemente sowie Kombinationen mit Halbleiterchips gebildet sein. Insbesondere kann die Steuerungseinheit eine Speichereinheit umfassen, in der Daten für eine oder mehrere Beleuchtungskulissen hinterlegt sein können. Darüber hinaus kann in der Speichereinheit auch ein Programm für die Rechnereinheit hinterlegt sein.

Die Steuerungseinheit kann beispielsweise dazu vorgesehen sein, die Auflösung eingegebener Daten durch den Nutzer entsprechend der Möglichkeiten der Auflösung durch die Fahrzeugbeleuchtungsvorrichtung anzupassen.

Die Lichtquellen des Fahrzeugscheinwerfers können demzufolge die Leuchtdioden bei einem Fahrzeugscheinwerfer sein, der auf einer Leuchtdiodenmatrix basiert. Bei einem laserbasierten Fahrzeugscheinwerfer können die Lichtquellen die Oberflächenanteile des Konversionselements sein, die mittels des Laserstrahls zum Aussenden sichtbaren Lichts aktiviert werden können.

Die Steuerungseinheit ist eingerichtet, die Lichtquellen des Fahrzeugscheinwerfers zum Erzeugen einer individuell einstellbaren Beleuchtungskulisse einzeln zu steuern. Die Steuerungseinheit kann diesbezüglich auf entsprechend einer eingestellten Beleuchtungskulisse gespeicherte Daten in der Speichereinheit zurückgreifen. Entsprechend dieser Daten steuert die Steuerungseinheit die Lichtquellen des Fahrzeugscheinwerfers, so dass der Fahrzeugscheinwerfer die gewünschte Beleuchtungskulisse erzeugt. Dies kann natürlich nicht nur für einen einzigen Fahrzeugscheinwerfer, sondern auch für zwei, mehrere Fahrzeugscheinwerfer oder sämtliche Fahrzeugscheinwerfer des Fahrzeugs vorgesehen sein. Insofern kann die Beleuchtungskulisse durch einen einzelnen Fahrzeugscheinwerfer aber auch durch mehrere, insbesondere alle Fahrzeugscheinwerfer gemeinsam gebildet sein.

Um die Beleuchtungskulisse individuell einstellen zu können, können in der Speichereinheit Daten für mehrere, unterschiedliche Beleuchtungskulissen gespeichert sein. Über ein Eingabemittel, beispielsweise eine Auswahltaste oder dergleichen kann der Nutzer die der gewünschten Beleuchtungskulisse entsprechenden Daten über die Steuerungseinheit auswählen. So besteht die Möglichkeit, dass der Nutzer aus einer vorzugsweisen Vielzahl von möglichen Beleuchtungskulissen individuell eine auswählt und mittels der Steuerungseinheit einstellt. Dadurch kann erreicht werden, dass auch benachbarte Fahrzeuge, die im Wesentlichen zeitgleich ihre Beleuchtungsvorrichtung aktivieren, voneinander anhand der Beleuchtungskulisse unterschieden werden können, so dass der Nutzer anhand der Beleuchtungskulisse sein Fahrzeug erkennen kann.

Ergänzend ist anzumerken, dass sich die Erfindung auf Fahrzeuge bezieht, die sich im abgestellten Zustand befinden, das heißt, die nicht in einem bestimmungsgemäßen Fahrbetrieb aktiv sind. Bei verbrennungskraftgetriebenen Fahrzeuge ist in diesem Zustand die Verbrennungskraftmaschine in der Regel ausgeschaltet. Darüber hinaus kann vorgesehen sein, dass das Fahrzeug in diesem Betriebszustand zumindest zeitweise verschlossen ist.

Erfindungsgemäß umfasst die Fahrzeugbeleuchtungsvorrichtung eine an die Steuerungseinheit angeschlossene Schnittstelle zum Eingeben von der Beleuchtungskulisse entsprechenden Daten durch einen Nutzer, wobei die Steuerungseinheit eingerichtet ist, die Beleuchtungskulisse entsprechend der vom Nutzer eingegebenen Daten einzustellen. Diese Ausgestaltung erlaubt es, dass der Nutzer selbst eine Beleuchtungskulisse vorgibt, die er individuell erstellen kann. Die Schnittstelle kann beispielsweise auf einem Protokoll wie Bluetooth, USB, IEEE, RS232 oder weiteren beruhen. Die Schnittstelle ist vorzugsweise an das Schnittstellenprotokoll hardwaremäßig angepasst ausgebildet. Vorzugsweise stellt der Nutzer der gewünschten Beleuchtungskulisse entsprechende Daten bereit, die beispielsweise in einem vorgegebenen Datenformat, wie JPG, BMP, GIF oder dergleichen vorliegen können. Besonders vorteilhaft erweist es sich, wenn die Schnittstelle derart ausgebildet ist, dass eine Speicherkarte des Nutzers angeschlossen werden kann, beispielsweise in Form einer SD-Karte, einer Micro-SD-Karte, oder dergleichen. Darüber hinaus kann natürlich auch vorgesehen sein, dass die Schnittstelle zum Anschließen eines Lesegerätes ausgebildet ist, welches Lesegerät dazu eingerichtet ist, grafische Daten, beispielsweise eines Bildes oder dergleichen zu erzeugen und über die Schnittstelle einzugeben. Diese Ausgestaltung ermöglicht es, papierbasierte Bilder einzulesen und für die Erzeugung der Beleuchtungskulisse zu nutzen. Die Steuerungseinheit ist ergänzend dafür ausgebildet, die vom Nutzer eingegebenen Daten bezüglich einer gewünschten Beleuchtungskulisse entsprechend aufzuarbeiten, so dass eine Beleuchtungskulisse in gewünschter Weise erzeugt werden kann. Die Steuerungseinheit kann ergänzend dafür ausgebildet sein, eine Bearbeitung der vom Nutzer eingegebenen Daten vorzunehmen, um diese in entsprechende Daten zum Einstellen der Beleuchtungskulisse umzuwandeln. Diese Ausgestaltung erweist sich insbesondere dann als vorteilhaft, wenn der Nutzer Bilddaten zum Erzeugen einer Beleuchtungskulisse vorgibt. So ist erfindungsgemäß vorgesehen, dass die Bilddaten, die ein farbiges Bild repräsentieren können, in entsprechende Grauwerte umgewandelt werden, die Helligkeitswerten zugeordnet werden können. Auf diese Weise ist es möglich, vom Nutzer vorgegebene Daten an die Möglichkeiten der Beleuchtung mittels des Scheinwerfers anzupassen. Zu diesem Zweck kann vorgesehen sein, dass die Rechnereinheit ein entsprechendes Programm zur Datenverarbeitung ablaufen lässt, mit dem die gewünschte Bearbeitung der Daten erfolgen kann.

Die Erfindung ermöglicht eine besondere Flexibilität insbesondere in Bezug auf eine Individualisierung der Beleuchtungskulisse, indem zum Beispiel als Beleuchtungskulisse die Darstellung eines Namens, einzelner oder mehrerer Zeichen, eines Schriftzugs und/oder dergleichen vorgesehen werden kann. Insbesondere kann der Name des Fahrzeugeigentümers, des Fahrers oder dergleichen dargestellt werden. Die Einstellung der Beleuchtungskulisse insbesondere zur Darstellung der vorgenannten Beleuchtungskulissen kann vorzugsweise über die Schnittstelle, aber auch über eine Eingabeeinheit für Nutzereingaben, auch MMI (Man-Machine-Interface) genannt, oder dergleichen erfolgen. Die Eingabeeinheit kann beispielsweise an die Schnittstelle angeschlossen sein.

Erfindungsgemäß umfasst die Beleuchtungsvorrichtung eine an die Steuerungseinheit angeschlossene Eingabeeinheit, die einen berührungssensitiven Bildschirm aufweist. Mittels des berührungssensitiven Bildschirms kann eine Auswahl von Beleuchtungskulissen angezeigt werden, die durch eine Betätigung des Nutzers jeweils individuell ausgewählt werden können. Darüber hinaus besteht die Möglichkeit, dass der Nutzer vorhandene Daten zu Beleuchtungskulissen durch entsprechende Nutzereingaben verändert, das heißt individualisiert. Darüber hinaus besteht natürlich die Möglichkeit, dass mittels des berührungssensitiven Bildschirms die beleuchtbare Umgebung des Fahrzeugs angezeigt wird und der Nutzer durch Eingaben auf dem berührungssensitiven Bildschirm die zu beleuchtenden Flächen auswählt und auf diese Weise Daten für eine Beleuchtungskulisse erstellt. Darüber hinaus kann auch eine Beleuchtungsstärke durch eine entsprechende Eingabe am berührungssensitiven Bildschirm ausgewählt werden. Es können auch Daten für eine Beleuchtungskulisse nachgearbeitet werden. Insgesamt erlaubt es diese Ausgestaltung, die Möglichkeiten von individuell einstellbaren Beleuchtungskulissen weiter zu verbessern. Gemäß einer Weiterbildung der Erfindung wird vorgeschlagen, dass der Fahrzeugscheinwerfer Lichtquellen unterschiedlicher Farbe und/oder hinsichtlich der Farbe einstellbare Lichtquellen aufweist. Dies kann zum Beispiel dadurch erreicht werden, dass bei einem auf einer Leuchtdiodenmatrix basierenden Fahrzeugscheinwerfer Leuchtdioden unterschiedlicher Farbe benachbart zueinander angeordnet sind. Darüber hinaus besteht natürlich die Möglichkeit, dass der Fahrzeugscheinwerfer eine Matrix aus Leuchtpixeln aufweist, wobei zum Beispiel ein Leuchtpixel drei einzeln aktivierbare Farben rot, grün und blau aufweist. Bei einem leuchtdiodenbasierten Fahrzeugscheinwerfer kann ein Pixel beispielsweise durch drei Leuchtdioden gebildet sein, die jeweils eine der drei vorgenannten Grundfarben bereitstellen können. So kann ein Pixel mit einstellbarer Farbe erreicht werden. Darüber hinaus kann natürlich auch vorgesehen sein, dass eine Konversionsschicht derart ausgebildet ist, dass sie in Abhängigkeit einer Laserstrahlung Licht unterschiedlicher Farbe imitiert.

Weiterhin kann vorgesehen sein, dass wenigstens drei Laserstrahlungsquellen vorgesehen sind, die Laserstrahlen unterschiedlicher Wellenlängen erzeugen, zum Beispiel einen Laserstrahl mit einer Wellenlänge im roten Spektrum, einen Laserstrahl mit einer Wellenlänge im grünen Spektrum und einen Laserstrahl im blauen Spektrum. Ergänzend kann mittels einer vierten Laserstrahlungsquelle ein Laserstrahl im gelben Bereich des Farbspektrums erzeugt werden. Eine solche Laserstrahlungsquelle kann durch einen RGBY-Laser gebildet sein. In dieser Ausgestaltung kann besonders vorteilhaft eine Konversionsschicht eingespart werden.

Der Nutzer kann demzufolge die Daten durch Auswahl auf einem an die Steuerungseinheit angeschlossenen berührungssensitiven Bildschirm eingeben. Darüber hinaus können Daten des Bildes über die Schnittstelle der Steuerungseinheit eingegeben werden und die Steuerungseinheit kann aus den Daten die Beleuchtungskulisse ermitteln und einstellen.

Entsprechend umfasst die Erfindung auch ein gattungsgemäßes Rechnerprogrammprodukt, wobei das Produkt Programmcodeabschnitte eines Programms zum Ausführen des erfindungsgemäßen Verfahrens zum Beleuchten einer Fahrzeugumgebung mittels wenigstens eines Fahrzeugscheinwerfers aufweist, wenn das Programm durch die Rechnereinheit der Steuerungseinheit ausgeführt wird, so dass die Fahrzeugbeleuchtungsvorrichtung individuell einstellbare Beleuchtungskulissen erzeugt. Das vorgenannte Rechnerprogrammprodukt kann als rechnerlesbares Speichermedium ausgebildet sein. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einem internen Speicher der Rechnereinheit zu laden, so dass die Rechnereinheit das Programm ausführen kann.

Vorzugsweise umfasst das Rechnerprodukt ein rechnerlesbares Medium, auf welchem die Programmcodeabschnitte gespeichert sind. Ein solches rechnerlesbares Medium kann beispielsweise ein Speicherbaustein, eine Kompaktdisc, ein USB-Stick oder dergleichen sein.

Darüber hinaus kann natürlich vorgesehen sein, dass die Steuerungseinheit zwischen wenigstens zwei Beleuchtungskulissen umschaltet. Entsprechend kann insbesondere vom Nutzer ein Ablauf für das Umschalten, vorzugsweise auch ein regelmäßiges Wechseln der Beleuchtungskulissen eingestellt sein. Darüber hinaus besteht natürlich die Möglichkeit, dass eine Beleuchtungskulisse ein sich kontinuierlich änderndes Beleuchtungsmuster erzeugt.

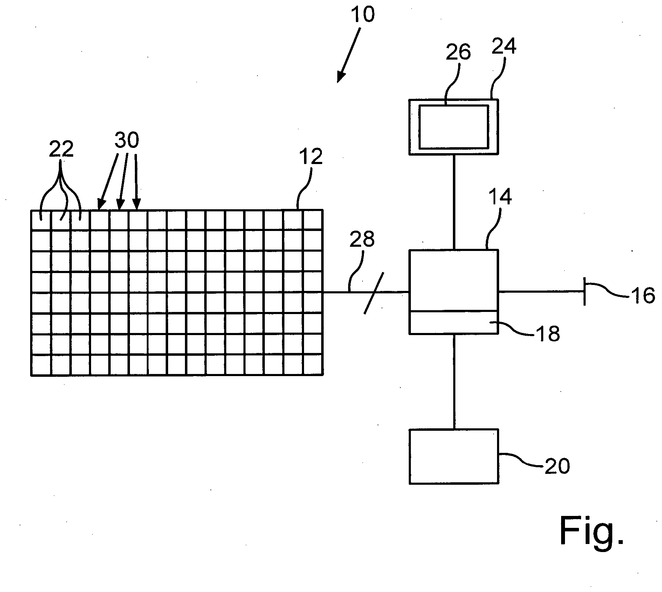

Weitere vorteilhafte Wirkungen und Merkmale ergeben sich anhand der folgenden Beschreibung eines Ausführungsbeispiels. Das anhand der einzigen Figur dargestellte Ausführungsbeispiel dient lediglich der Erläuterung der Erfindung und soll diese nicht beschränken.

Die einzige Fig. zeigt in schematischer Blockschaltbildansicht eine Beleuchtungsvorrichtung 10 mit einem Fahrzeugscheinwerfer 12 eines nicht näher dargestellten Kraftfahrzeugs. Die Fahrzeugbeleuchtungsvorrichtung 10 dient zum Beleuchten einer Fahrzeugumgebung, insbesondere während eines Fahrbetriebs des Kraftfahrzeugs. Darüber hinaus dient die Fahrzeugbeleuchtungsvorrichtung 10 vorliegend auch zur Beleuchtung einer Fahrzeugumgebung während eines abgestellten Zustands, in dem das Fahrzeug sich nicht in einem bestimmungsgemäßen Fahrzustand befindet. Die Fahrzeugbeleuchtungsvorrichtung 10 umfasst ferner eine Steuerungseinheit 14 zum Steuern des Fahrzeugscheinwerfers 12.

Der Fahrzeugscheinwerfer 12 umfasst eine Matrix aus einer Vielzahl einzeln steuerbarer Lichtquellen 22, die vorliegend als Leuchtdioden ausgebildet sind, und die einzeln steuerbar an die Steuerungseinheit 14 angeschlossen sind. Spalten von Lichtquellen 22 bilden jeweils Lichtsegmente 30. Die Steuerungseinheit 14 ist derart eingerichtet, dass die Lichtquellen 22 des Fahrzeugscheinwerfers 12 zum Erzeugen einer individuell einstellbaren Beleuchtungskulisse einzeln gesteuert werden können. Zu diesem Zweck ist die Steuerungseinheit 14 über eine Kommunikationsleitung an den Fahrzeugscheinwerfer 12 angeschlossen. Alternativ oder auch ergänzend kann vorgesehen sein, dass wenigstens eines der Lichtsegmente 30 durch die Steuerungseinheit 14 als Lichtsegment steuerbar ist, das heißt, sämtliche Lichtquellen 22 dieses Lichtsegments 30 sind, vorzugsweise ausschließlich, gemeinsam mittels der Steuerungseinheit 30 steuerbar.

An die Steuerungseinheit 14 ist ferner eine Schnittstelle 16 angeschlossen, die zum Eingeben von der Beleuchtungskulisse entsprechenden Daten durch einen Nutzer dient. Vorliegend ist die Schnittstelle 16 als Bluetooth-Schnittstelle ausgebildet. Die Steuerungseinheit 14 ist eingerichtet, die Beleuchtungskulisse entsprechend der vom Nutzer eingegebenen Daten über die Schnittstelle 16 einzustellen. Zu diesem Zweck umfasst die Steuerungseinheit 14 eine Rechnereinheit 18, die die vom Nutzer eingegebenen Daten entsprechend bearbeitet, so dass eine Auflösung, eine Farbauswahl und/oder dergleichen an die Darstellungsmöglichkeiten des Fahrzeugscheinwerfers 12 angepasst werden. Die auf diese Weise erzeugten Daten werden sodann von der Steuerungseinheit 14 genutzt, den Fahrzeugscheinwerfer 12 und hier insbesondere die Lichtquellen 22, entsprechend zu steuern, so dass die gewünschte Beleuchtungskulisse bereitgestellt wird.

An die Steuerungseinheit 14 ist ferner eine Eingabeeinheit 24 mit einem berührungssensitiven Bildschirm 26 angeschlossen. Die Eingabeeinheit 24 ermöglicht es, auf dem berührungssensitiven Bildschirm 26 die aktuell ausgewählte Beleuchtungskulisse anzuzeigen. Durch entsprechende Eingaben auf dem berührungssensitiven Bildschirm 26 durch den Nutzer kann der Nutzer die angezeigte Beleuchtungskulisse bearbeiten. Nach Abschluss der Bearbeitung kann ein entsprechendes Quittierungssignal an die Steuerungseinheit 14 übermittelt werden, die dann die geänderten Daten zum Anzeigen der entsprechend angepassten Beleuchtungskulisse anwendet.

An die Steuerungseinheit 14 ist ferner eine Speichereinheit 20 angeschlossen, in der sowohl den Beleuchtungskulissen zugeordneten Daten als auch ein Rechnerprogramm für die Rechnereinheit 18 gespeichert sind. Darüber hinaus können vom Nutzer über die Schnittstelle 16 der Steuerungseinheit 14 zugeführte Daten in der Speichereinheit 20 gespeichert werden. Dies erlaubt es, dass die Steuerungseinheit 14 entsprechend der ausgewählten Beleuchtungskulisse die Daten aus der Speichereinheit 20 abruft und zum Einstellen des Fahrzeugscheinwerfers 12 anwendet. Darüber hinaus besteht die Möglichkeit, einen Beleuchtungskulissenwechsel zu programmieren, wobei die Steuerungseinheit 14 aus der Speichereinheit 20 die jeweils für die jeweilige Beleuchtungskulisse erforderlichen Daten abruft.

Das Ausführungsbeispiel dient lediglich der Erläuterung der Erfindung und ist für diese nicht beschränkend. So können natürlich Funktionen, insbesondere Bauteile und Lichtquellen beliebig im Rahmen der beigefügten Ansprüche gestaltet sein.

Darüber hinaus beschränkt sich die Erfindung nicht auf die Anwendung bei einem einzigen Fahrzeugscheinwerfer. Natürlich können auch zwei oder mehrere Fahrzeugscheinwerfer in die Darstellung der Beleuchtungskulisse einbezogen sein und entsprechend von der Steuerungseinheit gesteuert werden. Darüber hinaus kann natürlich vorgesehen sein, dass ergänzend auch weitere Beleuchtungseinrichtungen des Fahrzeugs, beispielsweise eine Innenraumbeleuchtung und/oder dergleichen ergänzend zum Erzeugen der Beleuchtungskulisse hinzugezogen werden.

Auch wenn die Erfindung anhand eines Einsatzes bei Kraftfahrzeugen beschrieben wurde, kann sie doch gleichermaßen auch bei Wasser- und/oder Luftfahrzeugen zu Einsatz kommen.

## Patentansprüche

1. Fahrzeugbeleuchtungsvorrichtung (10) zum Beleuchten einer Fahrzeugumgebung eines Fahrzeugs, mit wenigstens einem an dem Fahrzeug angeordneten Fahrzeugscheinwerfer (12) und einer Steuerungseinheit (14) zum Steuern des Fahrzeugscheinwerfers (12), wobei an die Steuerungseinheit (14) eine Eingabeeinheit (24) angeschlossen ist, die einen berührungssensitiven Bildschirm (26) aufweist,
**dadurch gekennzeichnet, dass**
der Fahrzeugscheinwerfer (12) matrixartig aufgebaut ist und eine Matrix aus einer Mehrzahl von mittels der Steuerungseinheit (14) einzeln steuerbaren Lichtsegmenten (30) umfasst, wobei an die Steuerungseinheit (14) eine Schnittstelle (16) zum Eingeben von einer Beleuchtungskulisse entsprechenden Bilddaten durch einen Fahrer des Fahrzeugs angeschlossen ist, wobei die Beleuchtungskulisse dazu dient, eine Fahrzeugumgebung in vorgebbarer Weise auszuleuchten beziehungsweise zu beleuchten, wenn das Fahrzeug nicht in einem bestimmungsgemäßen Fahrbetrieb aktiv ist, wobei die Steuerungseinheit (14) eingerichtet ist, die Bilddaten in entsprechende Grauwerte umzuwandeln, diesen Helligkeitswerte zuzuordnen und die Lichtsegmente (30) zum Bereitstellen der Beleuchtungskulisse entsprechend der vom Fahrer eingegebenen Bilddaten einzustellen, und die Steuerungseinheit (14) ferner eingerichtet ist, mittels des berührungssensitiven Bildschirms (26) die beleuchtbare Umgebung des Fahrzeugs zum Nachbearbeiten von Daten für die Beleuchtungskulisse durch den Nutzer anzuzeigen.

2. Fahrzeugbeleuchtungsvorrichtung nach Anspruch 1,
**dadurch gekennzeichnet, dass**
die Lichtsegmente (30) jeweils wenigstens eine Lichtquelle (22) aufweisen und die Steuerungseinheit (14) eingerichtet ist, die Lichtquellen (22) der Lichtsegmente (30) zum Erzeugen der Beleuchtungskulisse einzeln zu steuern.

3. Fahrzeugbeleuchtungsvorrichtung nach einem der Ansprüche 1 oder 2,
**dadurch gekennzeichnet, dass**
der Fahrzeugscheinwerfer (12) Lichtquellen unterschiedlicher Farbe und/oder hinsichtlich der Farbe einstellbare Lichtquellen aufweist.

4. Fahrzeug mit einem Fahrwerk und einer mit dem Fahrwerk verbundenen Fahrerkabine, **gekennzeichnet durch** eine Fahrzeugbeleuchtungsvorrichtung nach einem der Ansprüche 1 bis 3.

5. Verfahren zum Beleuchten einer Fahrzeugumgebung eines Fahrzeugs mittels wenigstens eines an dem Fahrzeug angeordneten Fahrzeugscheinwerfers (12), der mittels einer Steuerungseinheit (14) gesteuert wird,
**dadurch gekennzeichnet, dass**
der Fahrzeugscheinwerfer (12) matrixartig aufgebaut ist und eine Matrix aus einer Mehrzahl von mittels der Steuerungseinheit (14) einzeln steuerbaren Lichtsegmenten (30) bereitstellt, die Lichtsegmente (30) zum Bereitstellen einer Beleuchtungskulisse entsprechend vom Fahrer eingegebenen Bilddaten eingestellt werden, zu welchem Zweck die Bilddaten über eine an die Steuerungseinheit (14) angeschlossene Schnittstelle (16) durch den Fahrer des Fahrzeugs eingegeben, die Bilddaten in entsprechende Grauwerte umgewandelt und diesen Helligkeitswerte zugeordnet werden, wobei mittels der Beleuchtungskulisse eine Fahrzeugumgebung in vorgebbarer Weise ausgeleuchtet beziehungsweise beleuchtet wird, wenn das Fahrzeug nicht in einem bestimmungsgemäßen Fahrbetrieb aktiv ist, und mittels einer an die Steuereinheit angeschlossenen Eingabeeinheit, die einen berührungssensitiven Bildschirm (26) aufweist, die beleuchtbare Umgebung des Fahrzeugs zum Nachbearbeiten von Daten für die Beleuchtungskulisse durch einen Nutzer angezeigt wird.

6. Verfahren nach Anspruch 5,
**dadurch gekennzeichnet, dass**
die Lichtsegmente (30) jeweils wenigstens eine Lichtquelle (22) bereitstellen und die Steuerungseinheit (14) die Lichtquellen (22) der Lichtsegmente (30) zum Erzeugen der Beleuchtungskulisse einzeln steuert.

7. Verfahren nach Anspruch 5 oder 6,
**dadurch gekennzeichnet, dass**
der Fahrer die Bilddaten durch Auswahl auf dem an die Steuerungseinheit (14) angeschlossenen berührungssensitiven Bildschirm (26) eingibt.

8. Rechnerprogrammprodukt umfassend ein Programm für eine Rechnereinheit (18) einer Steuerungseinheit (14) einer Fahrzeugbeleuchtungsvorrichtung (10), wobei das Programm Programmkodeabschnitte eines Programms zum Ausführen der Schritte eines Verfahrens nach einem der Ansprüche 5 bis 7 aufweist, wenn das Programm durch die Rechnereinheit (18) ausgeführt wird, sodass die Fahrzeugbeleuchtungsvorrichtung (10) individuell einstellbare Beleuchtungskulissen erzeugt.

## Claims

1. Vehicle illumination device (10) for illuminating the surroundings of a vehicle of a vehicle, comprising at least one vehicle headlamp (12) arranged on the vehicle and a control unit (14) for controlling the vehicle headlamp (12), wherein an input unit (24) is connected to the control unit (14), which input unit has a touch-sensitive screen (26),
**characterised in that**
the vehicle headlamp (12) has a matrix-like structure and comprises a matrix of a plurality of light segments (30) which can be controlled individually by means of the control unit (14), an interface (16) being connected to the control unit (14) for input by a driver of the vehicle of image data corresponding to an illumination backdrop, the illumination backdrop being used to light up or illuminate surroundings of a vehicle in a pre-definable manner when the vehicle is not active in accordance with an intended driving mode, wherein the control unit (14) is adapted to convert the image data into corresponding greyscale values, to assign brightness values thereto and to adjust the light segments (30) for providing the illumination backdrop in accordance with the image data input by the driver, and the control unit (14) is further adapted to display, by means of the touch-sensitive image screen (26), the illuminable surroundings of the vehicle for post-processing by the user of data for the illumination backdrop.

2. Vehicle illumination device according to claim 1,
**characterised in that**
the light segments (30) each have at least one light source (22) and the control unit (14) is adapted to control the light sources (22) of the light segments (30) individually for generating the illumination backdrop.

3. Vehicle illumination device according to any one of claims 1 or 2,
**characterised in that**
the vehicle headlamp (12) has light sources of different colours and/or light sources that are adjustable with respect to colour.

4. Vehicle with a chassis and a cab connected to the chassis, **characterised by** a vehicle illumination device according to any one of claims 1 to 3.

5. Method for illuminating surroundings of a vehicle by means of at least one vehicle headlamp (12) arranged on the vehicle and controlled by means of a control unit (14),
**characterised in that**
the vehicle headlamp (12) has a matrix-like structure and provides a matrix of a plurality of light segments (30) which can be individually controlled by means of the control unit (14), the light segments (30) are adjusted in order to provide an illumination backdrop in accordance with image data input by the driver, for which purpose the image data are input by the driver of the vehicle via an interface (16) connected to the control unit (14), the image data are converted into corresponding greyscale values and brightness values are assigned thereto, wherein surroundings of a vehicle are lit up or illuminated in a pre-definable manner by means of the illumination backdrop when the vehicle is not active in accordance with an intended driving mode, and the illuminable surroundings of the vehicle are displayed by means of an input unit which is connected to the control unit and has a touch-sensitive screen (26) for post-processing of the data for the illumination backdrop by the user.

6. Method according to claim 5,
**characterised in that**
the light segments (30) each provide at least one light source (22) and the control unit (14) individually controls the light sources (22) of the light segments (30) to generate the illumination backdrop.

7. Method according to claim 5 or 6,
**characterised in that**
the driver inputs the image data by selection on the touch-sensitive screen (26) connected to the control unit (14).

8. Computer program product comprising a program for a processing unit (18) of a control unit (14) of a vehicle illumination device (10), wherein the program has program code portions of a program for executing the steps of a method according to any one of claims 5 to 7 when the program is executed by the processing unit (18) so that the vehicle illumination device (10) generates individually adjustable illumination backdrops.

## Revendications

1. Dispositif d'éclairage de véhicule (10) permettant d'éclairer un environnement de véhicule, comprenant au moins un phare de véhicule (12) agencé sur le véhicule et une unité de commande (14) permettant de commander le phare de véhicule (12), dans lequel une unité d'entrée (24) qui présente un écran tactile (26) est reliée à l'unité de commande (14),
**caractérisé en ce que**,
le phare de véhicule (12) est structuré à la manière d'une matrice et comprend une matrice constituée d'une pluralité de segments lumineux (30) pouvant être commandés de manière individuelle au moyen de l'unité de commande (14), dans lequel une interface (16) permettant à un conducteur du véhicule d'entrer des données d'image correspondant à un arrière-plan d'éclairage est reliée à l'unité de commande (14), dans lequel l'arrière-plan d'éclairage sert à illuminer ou éclairer un environnement de véhicule d'une manière pouvant être prédéfinie lorsque le véhicule n'est pas actif dans un mode de conduite prévu, dans lequel l'unité de commande (14) est conçue pour convertir les données d'image en valeurs de gris correspondantes, leur associer des valeurs de luminosité et ajuster les segments lumineux (30) afin de fournir l'arrière-plan d'éclairage conformément aux données d'image entrées par le conducteur, et l'unité de commande (14) est en outre conçue pour afficher, au moyen de l'écran tactile (26), l'environnement pouvant être éclairé du véhicule afin que l'utilisateur puisse traiter ultérieurement des données destinées à l'arrière-plan d'éclairage.

2. Dispositif d'éclairage selon la revendication 1,
**caractérisé en ce que**
les segments lumineux (30) présentent respectivement au moins une source lumineuse (22) et l'unité de commande (14) est conçue pour commander de manière individuelle les sources lumineuses (22) des segments lumineux (30) afin de générer l'arrière-plan d'éclairage.

3. Dispositif d'éclairage selon la revendication 1 ou 2,
**caractérisé en ce que**
le phare de véhicule (12) présente des sources lumineuses de différentes couleurs et/ou des sources lumineuses dont la couleur peut être ajustée.

4. Véhicule avec un châssis et une cabine de conduite reliée au châssis, **caractérisé par** un dispositif d'éclairage de véhicule selon l'une quelconque des revendications 1 à 3.

5. Procédé d'éclairage d'un environnement de véhicule au moyen d'au moins un phare de véhicule (12) agencé sur le véhicule et commandé au moyen d'une unité de commande (14),
**caractérisé en ce que**
le phare de véhicule (12) est structuré à la manière d'une matrice et fournit une matrice constituée d'une pluralité de segments lumineux (30) pouvant être commandés de manière individuelle au moyen de l'unité de commande (14), les segments lumineux (30) sont ajustés conformément aux données d'image entrées par le conducteur afin de fournir un arrière-plan d'éclairage, les données d'image étant entrées à cette fin par le conducteur du véhicule par l'intermédiaire d'une interface (16) reliée à l'unité de commande (14), les données d'image étant converties en valeurs de gris correspondantes et des valeurs de luminosité leur étant associées, dans lequel un environnement de véhicule est illuminé ou éclairé au moyen de l'arrière-plan d'éclairage d'une manière pouvant être prédéfinie lorsque le véhicule n'est pas actif dans un mode de conduite prévu, et l'environnement d'éclairage du véhicule étant affiché au moyen d'une unité d'entrée reliée à l'unité de commande et présentant un écran tactile (26) afin qu'un utilisateur puisse traiter ultérieurement des données destinées à l'arrière-plan d'éclairage.

6. Procédé selon la revendication 5,
**caractérisé en ce que**
les segments lumineux (30) fournissent respectivement au moins une source lumineuse (22) et l'unité de commande (14) commande de manière individuelle les sources lumineuses (22) des segments lumineux (30) afin de générer l'arrière-plan d'éclairage.

7. Procédé selon la revendication 5 ou 6,
**caractérisé en ce que**
le conducteur entre les données d'image par sélection sur l'écran tactile (26) relié à l'unité de commande (14).

8. Produit-programme informatique comprenant un programme destiné à une unité informatique (18) d'une unité de commande (14) d'un dispositif d'éclairage de véhicule (10), dans lequel le programme présente des sections de code de programme d'un programme permettant de mettre en œuvre les étapes d'un procédé selon l'une quelconque des revendications 5 à 7 lorsque le programme est mis en œuvre grâce à l'unité informatique (18), de sorte que le dispositif d'éclairage de véhicule (10) génère des arrière-plans d'éclairage pouvant être ajustés de manière individuelle.
